Europäisches Patentamt

European Patent Office

Office européen des brevets

(19)

(11) Veröffentlichungsnummer : **0 202 411**
**B1**

## (12) EUROPÄISCHE PATENTSCHRIFT

(45) Veröffentlichungstag der Patentschrift :
13.12.89

(51) Int. Cl.⁴ : **B 01 D 53/34**

(21) Anmeldenummer : 86103495.7

(22) Anmeldetag : 14.03.86

(54) Verfahren und Vorrichtung zur Rauchgasreinigung bei Feuerungsanlagen.

(30) Priorität : 23.05.85 DE 3510671
29.06.85 DE 3523417

(43) Veröffentlichungstag der Anmeldung :
26.11.86 Patentblatt 86/48

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
DE--A-- 3 232 546
DE--C-- 825 393
US--A-- 2 891 847

(73) Patentinhaber : Kernforschungsanlage Jülich Gesellschaft mit beschränkter Haftung
Postfach 1913
D-5170 Jülich 1 (DE)

(72) Erfinder : Scholz, Franz
Pastorengasse 20
D-4053 Jüchen 4 (DE)
Erfinder : von der Decken, Claus Benedikt, Prof. Dr.
Reumontstrasse 34
D-5100 Aachen (DE)

## Beschreibung

Die Erfindung bezieht sich auf ein Verfahren zur Rauchgasreinigung bei Feuerungsanlagen durch Entschwefelung und nachfolgende Entstickung unter Zuführung von Ammoniak an Aktivkoks-Schüttkörpern im Rutsch- bzw. Wanderbett, wobei die Entschwefelung und Entstickung in übereinander befindlichen Zonen einer abwärts wandernden vertikalen Aktivkokssäule erfolgt und zwischen der Entschwefelungszone und Entstickungszone Ammoniakgas eingeblasen wird sowie auf eine Vorrichtung zur Durchführung des Verfahrens.

Rauchgase von Feuerungsanlagen, insbesondere Kraftwerken, enthalten erhebliche Mengen an Schwefeloxid und Stickoxide, deren anwachsender Gehalt in der Atmosphäre zumindest mitverantwortlich sein dürfte für eine zunehmende Beeinträchtigung bislang intakter Ökosysteme, weshalb eine möglichst weitgehende Abtrennung dieser Schadstoffe aus den Rauchgasen dringlichst geboten erscheint, bevor diese in die Umwelt entlassen werden können. Als effiziente Entschwefelung wird bereits das Prinzip der Rauchgaswäsche mit Kalksuspensionen angewandt, das unter Bildung von so erheblichen Gipsmengen abläuft, daß deren nützliche Verwendung fraglich erscheint. Man hat daher auch Naßverfahren mit Eisenkomplexsalz- oder Ammoniaklösungen erwogen, bei denen als Nebenprodukt Kunstdünger (Ammoniumsulfat bzw. Gemische von Ammoniumsulfat und -nitrat) anfällt.

Daneben gibt es insbesondere mit Kalk arbeitende halbtrockene und Trocken-Verfahren sowie die Adsorption und Aufoxidation von $SO_2$ an Aktivkohle.

Für die Verminderung des $NO_x$-Gehalts sind zum einen feuerungstechnische Maßnahmen geeignet und zum anderen die Reaktion mit Ammoniak in Gegenwart eines Katalysators, z. B. von Aktivkohle.

Es wurde auch bereits ein kombiniertes Verfahren entwickelt, bei dem das Rauchgas axial zwei ringförmigen, konzentrisch angeordneten Aktivkoksbetten zugeführt wird, die radial nach außen durchströmt werden, wobei im Zwischenraum zwischen den Ringzonen Ammoniak zugeführt wird (s. « Brennstoff-Wärme-Kraft » 36 (1984), S. 16).

Ein weiteres Wanderbettverfahren zur Entschwefelung und Entstickung ist aus der DE-A-32 32 546 bekannt : Bei diesem Verfahren wird einer abwärtsbewegten Aktivkokssäule « meanderförmig » Rauchgas im Querstrom unter wiederkehrendem Richtungswechsel zugeführt, dem an den Umkehrpunkten außerhalb der Säule Ammoniak zugemischt wird.

Bei den vorstehend beschriebenen Radialfluß- oder Querstrombehandlungen von Rauchgas im vertikal abwärts wandernden Koksbett ist die Ausnutzung der Koksschichten nicht optimal und eine bestmögliche Schadstoffverminderung insbesondere des Schwefeldioxids nur bei unwirtschaftlich hohem Koksdurchsatz gewährleistbar.

Ziel der Erfindung ist daher eine Verbesserung der kombininierten Entstickung und Entschwefelung von Rauchgasen an Aktivkoks im Hinblick auf Wirtschaftlichkeit und Reinigungsergebnis.

Das zu diesem Zweck entwickelte erfindungsgemäße Verfahren ist dadurch gekennzeichnet, daß das Rauchgas im Gegenstrom die Aktivkokssäule durchströmt und dieser oberhalb der Ausschleusung zugeführt wird.

Bei diesem Verfahren wird der unter der Wirkung der Schwerkraft von oben nach unten wandernden Koksschicht von unten her Rohgas entgegengeschickt, das damit mit zunehmender Abreicherung « frischere » Koksschichten antrifft, so daß eine bestmögliche Schadstoffverminderung gewährleistet ist, wobei zunächst (in der unteren Zone) Schwefeloxide soweit abgetrennt werden, daß im oberen, mit Ammoniak beschickten Entstickungsbereich keine Ammoniak-Verluste mehr durch Ammonsulfatbildung auftreten, so daß in der oberen Entstickungszone eine ausreichende Umsetzung von $NO_x$ mit Ammoniak gegebenenfalls unter stufenweiser Zuführung desselben erreicht wird.

Durch Auswahl brauchbarer Schüttkörper aus Aktivkoks bzw. Kohle oder mit Kohleoberfläche (z. B. Kugeln, Ringe, Zylinder etc. ; Ø 3-50 mm, insbesondere 10 bis 25 mm, zur Zeit käufliche Aktivkoks-Schüttkörper haben Zylinderdurchmesser von maximal 6 mm) und zweckmäßiger Säulenhöhen kann eine ausreichende (nach oben gerichtete) Gasgeschwindigkeit in der abwärts wandernden Aktivkokssäule gewährleistet werden, so daß die vertikale Unterteilung der Säule in die beiden Behandlungszonen gewährleistet werden kann, indem insbesondere die Mitnahme des Ammoniaks durch die obere Entstickungszone ausreichend ist und eine Rückdiffusion in die Entschwefelungszone vermieden wird.

Die Rauchgaszufuhr erfolgt oberhalb der Feststoffausschleusung, so daß eine Berührung ruhender Koksschichten mit verlangsamten heißen Gasen am Zutritt derselben vermieden wird. Vorzugsweise sind jalousieartige Gaseinlässe mit Gaszutritt über Ringspalte vorgesehen, unter Vermeidung von verstopfungsträchtigen Siebplatten.

Die Behandlungstemperaturen liegen, wie bei Aktivkoks-Verfahren üblich, z. B. zwischen 90° und 130°, etwa bei 120 °C in der Entschwefelungs- und Entstickungszone. Die Anlage kann daher direkt zwischen dem Staubfilter und dem Kamin angeordnet werden, ohne daß Wärmeaustauscher für Temperaturabsenkungen oder -anhebungen notwendig wären.

Ein zur Durchführung des erfindungsgemäßen Verfahrens brauchbarer Wanderbettreaktor ist gekennzeichnet durch eine Aktivkokssäule in einem vertikalen Behälter mit oberer Aktivkoksaufgabe und unterer Ausschleusung der beladenen Aktivkokssäule unterhalb der Gaszufuhr, sowie einem Ammoniakverteilersystem zumindest zwischen der Entschwefelungszone und der Entstickungszone.

Besonderheiten des Wanderbettreaktors gehen aus der nachfolgenden Beschreibung von Ausführungsbeispielen unter Bezugnahme auf die angefügten Zeichnungen hervor ; es zeigen :

Figur 1 und 2 ein Schema für einen Wanderbettreaktor mit gröberem, vorzugsweise kugelförmigem Aktivkoks im senkrechten Schnitt und in Aufsicht (bei unterschiedlichen Querschnittsformen) ;

Figur 3 den oberen Teil eines Reaktorbehälters, der modulartig (dargestellt sind 2 Module) aufgebaut ist, mit speziellem Verteilerraum ;

Figur 4 einen säulenförmigen Wanderbettreaktor mit abgewandeltem Gaseinlaß- bzw. Feststoffauslaßende.

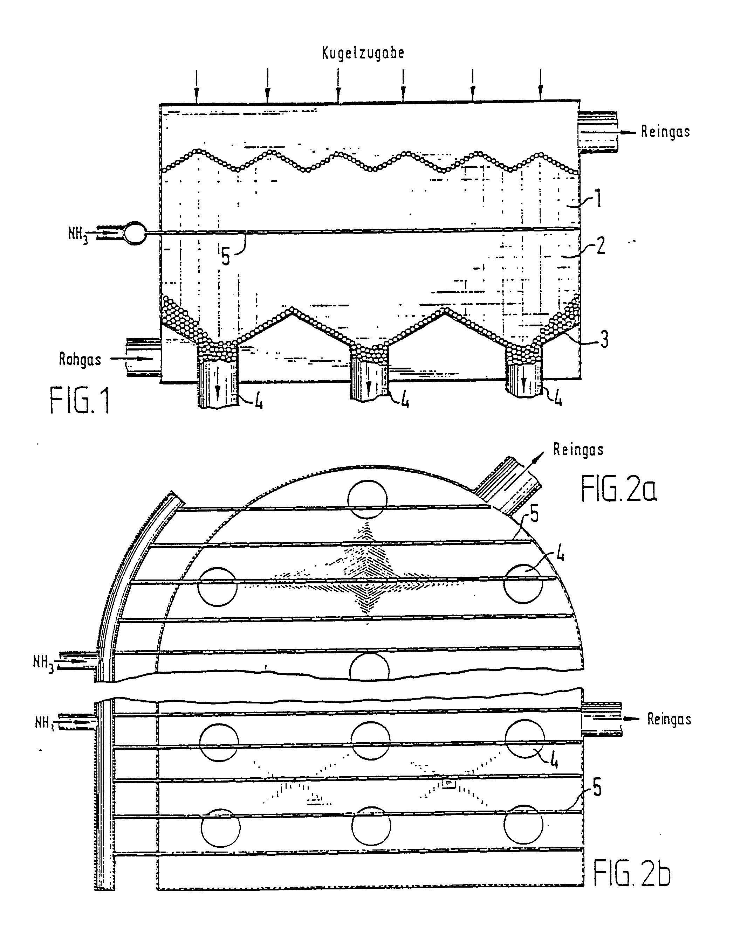

Wie Figur 1 zeigt, erfolgt die Aktivkoksaufgabe (Kugeln, Zylinder, Körner u. a.) am oberen Ende des Reaktors an einer Vielzahl von Aufgabestellen, um eine einigermaßen einheitliche Betthöhe zu gewährleisten. Der Aktivkoks durchwandert dann unter der Wirkung der Schwerkraft nacheinander die Zone 1 der $NO_x$-Reduktion und die Zone 2 der $SO_x$-Adsorption. Bei 3 wird über Schlitze oder Bohrungen Rauchgas über den unteren Säulenboden zugeführt und bei 4 erfolgt der Aktivkoksabzug über Schleusen. Im Zwischenbereich 1 und 2 wird Ammoniak über möglichst flächendeckende Verteilerrohre 5 zugeführt. Das Reingas verläßt den Reaktor am oberen Ende.

Wie aus Figur 2 hervorgeht, kann der Querschnitt beliebig gewählt werden, wie z. B. quadratisch (Figur 2b) oder rund (Figur 2a).

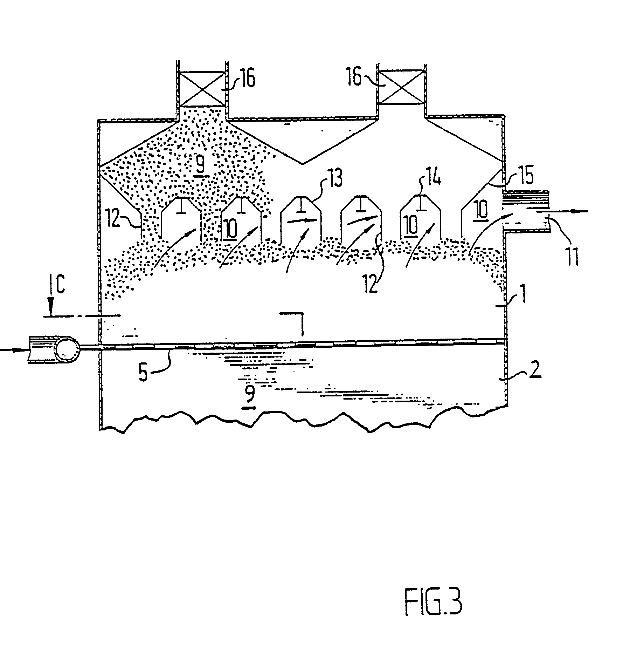

Figur 3 zeigt den oberen Teil eines modular aufgebauten Wanderbettreaktors mit oberer Entstickungszone 1 und unterer Entschwefelungszone 2 sowie einer $NH_3$-Zufuhr über einen Verteiler 5 im Übergangsbereich zwischen beiden Zonen.

Die Höhe der Entschwefelungszone 2 ist abhängig vom $SO_2$-Gehalt der Rauchgase. Um den Druckverlust zu begrenzen, wird man sie möglichst gering halten. Andererseits muß das Gas eine Mindestzeit im Bett verweilen, um möglichst vollständig gereinigt zu werden.

Das am unteren Ende in die Feststoffschüttung 9 eingelassene Rauchgas gelangt nach Durchlaufen des Feststoffs und der Reinigungsreaktionen als Reingas in den Gassammelraum 10 und verläßt den Reaktor über die Gasabzugsstutzen 11.

Der Gassammelraum 10 ergibt sich zwischen den Trichterrohren 12 des Verteilerbodens, über den eine bestmögliche Verteilung des Feststoffs 9 über den Reaktorquerschnitt stattfindet.

Vorzugsweise sind die Trichter 13 reihenweise angeordnet, so daß zwischen den Trichterreichen Stützträger 14 als Auflagen des Verteilerbodens 15 dienen können. Die Trichterrohre sind zumindest 10 cm lang und insbesondere von einer solchen Länge, daß der Gasabzug deutlich über der Festbettschüttung liegt.

Der Feststoff 9 gelangt über Schleusen 16 in den Reaktor und verläßt diesen über untere Schleusen.

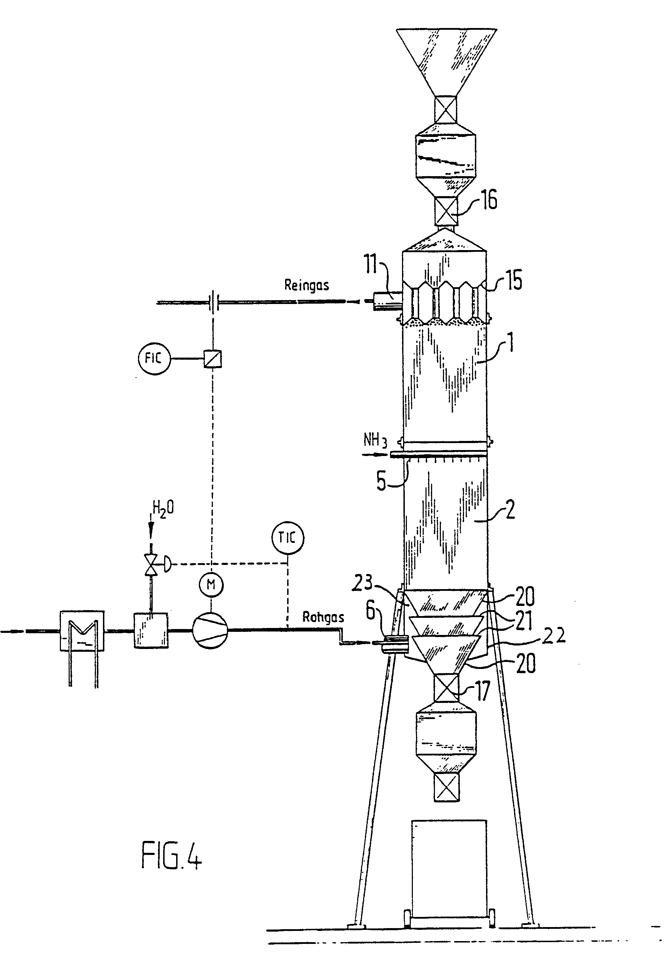

Figur 4 zeigt eine halbtechnische Anlage mit einem Aktivkoks-Wanderbettreaktor mit einer oberen Entstickungszone 1 und einer unteren Entschwefelungszone 2, zwischen denen bei 5 Ammoniak eingeleitet wird.

Als wesentlichen Unterschied gegenüber den in Figuren 1 bis 3 gezeigten Anordnungen hat der Wanderbettreaktor gemäß Figur 4 einen Feststoffaustrag am unteren Ende, der durch aufeinanderfolgende Kegelstümpfe 20 gebildet wird, zwischen denen Gas-Einlaßschlitze 21 verbleiben, über die das bei 6 zutretende Rohgas in das Wanderbett gelangt. Der unterste Kegelstumpf mündet in der Ausschleusvorrichtung 17, über die ein fortlaufender oder intermittierter Austrag des beladenen Aktivkokses möglich ist.

Der jalousieartige Gaseinlaß über 21 ist insbesondere so gestaltet, daß eine gute Gleichverteilung des über den vom Mantel 22 umschlossenen Gasverteilerraum 23 zutretenden Gases über den Reaktorquerschnitt erreicht wird und ein « geordneter » Feststoffaustrag ohne Ausbildung von Toträumen, so daß in der Tat eine schichtweise Wanderung des Feststoffs durch den Reaktor bis in Nähe des Austrages gewährleistet ist. Die Kegelstümpfe haben dazu eine Wandneigung (gegen die Vertikale) von etwa 30°, und die kleine Basisfläche der Kegelstümpfe entspricht vorzugsweise etwa der halben Querschnittsfläche des Bettes, d. h., das Rohgas fließt etwa zu gleichen Teilen von der Zugabestelle nach innen und nach außen, was eine gute Verteilung des Gases bei minimalem Druckverlust ergibt.

Als Aktivkoks-Schüttkörper werden im Rahmen der vorliegenden Beschreibung und Ansprüche alle Schüttkörper auf Kohlebasis, einschließlich von Körpern mit (nur) Kohleoberfläche bezeichnet, die als « Katalysator » für die Entschwefelung und Entstickung von Rauchgas brauchbar sind.

**Patentansprüche**

1. Verfahren zur Rauchgasreinigung bei Feuerungsanlagen durch Entschwefelung und nachfolgende Entstickung unter Zuführung von Ammoniak an Aktivkoks-Schüttkörpern im Rutsch- bzw. Wanderbett, wobei die Entschwefelung und Entstickung in übereinander befindlichen Zonen einer abwärts wandernden vertikalen Aktivkokssäule erfolgt und zwischen der Entschwefelungszone und Entstickungszone Ammoniakgas eingeblasen wird, dadurch gekennzeichnet, daß das Rauchgas im Gegenstrom die Aktivkokssäule durchströmt und dieser oberhalb der Ausschleusung zugeführt wird.

2. Wanderbettreaktor zur Durchführung des Verfahrens nach Anspruch 1, gekennzeichnet durch eine Aktivkokssäule in einem vertikalen Behälter mit oberer Aktivkoksaufgabe (16) und unterer Ausschleusung (17) der beladenen Aktivkokssäule unterhalb der Gaszufuhr (6), sowie einem Ammoniakverteilersystem (5) zumindest zwischen der Entschwefelungszone (2) und der Entstickungszone (1).

3. Wanderbettreaktor nach Anspruch 2, gekennzeichnet durch eine Aktivkoksaufgabe über eine gleichmäßig verteilte flächendeckende Anzahl von Aufgabestellen am oberen Ende des Reaktors.

4. Wanderbettreaktor nach Anspruch 3, gekennzeichnet durch einen Feststoff-Verteilerraum am oberen Ende mit einem Verteilerboden (15) aus miteinander verbundenen Trichtern (13), deren Rohre (12) zumindest soweit nach unten vorragen unter Ausbildung eines Gassammelraumes (10) mit Gasabzugsstutzen (11), daß der Gasabzug deutlich oberhalb der Festbettschüttung liegt.

5. Wanderbettreaktor nach Anspruch 4, gekennzeichnet durch eine Reihenanordnung der Trichter (13) und Stützträger (14) zwischen den Reihen.

6. Wanderbettreaktor nach einem der Ansprüche 2 bis 5, gekennzeichnet durch einen schleusenartigen Aktivkoksauslaß (17) unter einem allgemein kegelförmigen Säulenende mit jalousieartigen Gaseinlässen (20, 21).

7. Wanderbettreaktor nach Anspruch 6, dadurch gekennzeichnet, daß das Säulenende durch aufeinanderfolgende Kegelstümpfe (20) mit Einlaßzwischenraum (21) gebildet wird, deren Kegelwand einen Winkel von etwa 30° gegen die Vertikale bildet.

8. Wanderbettreaktor nach Anspruch 6 oder 7, dadurch gekennzeichnet, daß die untere kleine Basisfläche der Kegelstümpfe (20) etwa halb so groß ist wie die Querschnittsfläche des Bettes.

## Claims

1. Process for purifying waste gases from combustion plants by desulphurization and subsequent denitrification with the addition of ammonia on activated carbon packing in a sliding bed or moving bed, the desulphurization and denitrification taking place in the superposed zones of a downward-moving vertical column of activated carbon and ammonia gas being blown in between the desulphurization zone and the denitrification zone, characterized in that the waste gas flows in counter-current through the column of activated carbon and is fed to the latter above the discharge point.

2. Moving bed reactor for carrying out the process according to Claim 1, characterized by a column of activated carbon in a vertical vessel with an upper activated carbon charge point (16) and a lower discharge point (17) for the loaded column of activated carbon below the gas feed (6), and an ammonia distributor system (5) at least between the desulphurization zone (2) and the denitrification zone (1).

3. Moving bed reactor according to Claim 2, characterized by activated carbon charging across a uniformly distributed number, covering the area, of charging points at the upper end of the reactor.

4. Moving bed reactor according to Claim 3, characterized by a solid distributor space at the upper end with a distributor plate (15) of mutually joined funnels (13), the tubes (12) of which project downwards, forming a gas collection space (10) with gas exit branches (11), for at least such a distance, that the gas exit is located markedly above the solids bed packing.

5. Moving bed reactor according to Claim 4, characterized by an arrangement of the funnels (13) in rows and by support carriers (14) between the rows.

6. Moving bed reactor according to one of Claims 2 to 5, characterized by a tube-type activated carbon outlet (17) below a generally conical column end with louvre-type gas inlets (20, 21).

7. Moving bed reactor according to Claim 6, characterized in that the column end is formed by successive truncated cones (20) with an inlet interspace (21), the cone wall of which forms an angle of about 30° to the vertical.

8. Moving bed reactor according to Claim 6 or 7, characterized in that the lower small base area of the truncated cones (20) is about half the size of the cross-sectional area of the bed.

## Revendications

1. Procédé d'épuration des gaz de fumée dans des chaufferies, par désulfuration et ensuite dénitruration par apport d'ammoniac sur des corps en vrac en coke actif en lit glissant ou en lit mobile, en effectuant la désulfuration et la dénitruration dans des zones se trouvant l'une au-dessus de l'autre d'une colonne verticale de coke actif se déplaçant vers le bas et en insufflant de l'ammoniac gazeux entre la zone de désulfuration et la zone de dénitruration, caractérisé en ce qu'il consiste à faire passer le gaz de fumée à contre-courant dans la colonne de coke actif et à l'envoyer à celle ci au-dessus de l'évacuation.

2. Réacteur à lit mobile pour la mise en œuvre du procédé suivant la revendication 1, caractérisé par une colonne de coke actif dans une cuve verticale ayant un dispositif de chargement supérieur (16) de coke actif et une évacuation inférieure (17) de la colonne de coke actif chargée en dessous de l'amenée du gaz (6), ainsi qu'un système répartiteur d'ammoniac (5) au moins entre la zone de désulfuration (2) et la zone de dénitruration (1).

3. Réacteur à lit mobile suivant la revendication 2, caractérisé par un dispositif de chargement de coke actif par un nombre de points de chargement recouvrant la surface d'une manière répartie uniformément à l'extrémité supérieure du réacteur.

4. Réacteur à lit mobile suivant la revendication 3, caractérisé par une chambre de répartition de la matière solide à l'extrémité supérieure et comprenant un fond formant répartiteur (15) constitué de trémies (13) qui sont reliées les unes aux autres et dont les parties cylindriques (12) font saillie au moins si loin vers le bas, en formant une chambre collectrice des gaz (10) avec un embout d'évacuation des gaz (11), que l'évacuation des gaz se trouve nettement au-dessus du tas de lit de matière solide.

5. Réacteur à lit mobile suivant la revendication 4, caractérisé par un montage en série des trémies (13) et de poutres de support (14) entre les rangées.

6. Réacteur à lit mobile suivant l'une des revendications 2 à 5, caractérisé par une sortie du coke actif (17) de type à sas en dessous d'une extrémité de colonne ayant la forme générale d'un cône, et avec des entrées pour le gaz (20, 21) de type à lamelles.

7. Réacteur à lit mobile suivant la revendication 6, caractérisé en ce que l'extrémité de la colonne est formée de troncs de cône (20) successifs, avec une chambre intermédiaire d'entrée (21) dont la paroi conique fait un angle de 30° environ avec la verticale.

8. Réacteur à lit mobile suivant la revendication 6 ou 7, caractérisé en ce que la surface de la petite base inférieure des troncs de cône (20) est égale à environ la moitié de la surface de la section transversale du lit.

Kugelzugabe

Reingas

1

NH₃

5

2

3

Rohgas

4       4       4

FIG.1

Reingas

FIG.2a

5

4

NH₃

NH₃

Reingas

4

5

FIG.2b

FIG.3

FIG.4